# EUROPÄISCHE PATENTSCHRIFT

(11) **EP 3 630 592 B1**
(45) Veröffentlichungstag und Bekanntmachung des Hinweises auf die Patenterteilung: **07.07.2021**
(21) Anmeldenummer: 18727232.3
(22) Anmeldetag: 18.05.2018
(51) Int. Cl.: B62M 6/20, B60K 6/365, B62M 11/02, B62M 6/40, B62M 6/55

(54) **FAHRRAD MIT ELEKTRISCHEM ANTRIEB MIT LEISTUNGSVERZWEIGUNG**
BICYCLE HAVING ELECTRIC DRIVE WITH POWER DISTRIBUTION
VÉLO À ENTRAÎNEMENT ÉLECTRIQUE AVEC DÉRIVATION DE PUISSANCE

(30) Priorität: 23.05.2017 DE 102017208714; 01.09.2017 DE 102017215349
(43) Veröffentlichungstag der Anmeldung: 08.04.2020
(73) Patentinhaber: Mahle International GmbH, 70376 Stuttgart (DE)
(72) Erfinder: DÖPPNER, Enrico, 36137 Grossenlüder (DE); MOCZKO, David, 70569 Stuttgart (DE); OPLOH, Amir, 01069 Dresden (DE); STOLL, Sebastian, 86923 Finning (DE); WIRTH, Christian, 85742 Mossinning (DE)
(74) Vertreter: BRP Renaud & Partner mbB Rechtsanwälte Patentanwälte Steuerberater
(86) Internationale Anmeldenummer: PCT/EP2018/063135
(87) Internationale Veröffentlichungsnummer: WO 2018/215347

(56) Entgegenhaltungen:
- EP-A1- 2 838 783
- WO-A1-00/43259

## Beschreibung

Die vorliegende Erfindung betrifft einen elektrischen Antrieb bzw. Hilfsantrieb für ein Fahrrad gemäß dem Oberbegriff des Anspruchs 1 sowie ein Fahrrad, das mit einem solchen elektrischen Antrieb bzw. Hilfsantrieb ausgestattet ist.

Fahrräder mit elektrischem Antrieb sind allgemein als "e-Bike" bekannt. Der elektrische Antrieb kann dabei als alleiniger Antrieb, also als Hauptantrieb, vorzugsweise jedoch als Hilfsantrieb dienen. Im vorliegenden Zusammenhang wird unter dem Begriff "Antrieb" sowohl ein Hauptantrieb als auch ein Hilfsantrieb verstanden. Bei einem Hilfsantrieb unterstützt der Elektromotor die Antriebsleistung des jeweiligen Fahrradfahrers, die dieser dabei in üblicher Weise über Pedale und eine Kurbelwelle aufbringt. Bei einem sogenannten "Pedelec" erfolgt ausschließlich eine solche Antriebsunterstützung. Ein elektromotorisches Antreiben des Fahrrads ohne eine eigene Antriebsleistung des Fahrradfahrers ist bei einem Pedelec nicht vorgesehen. Sofern der Antrieb als Hauptantrieb ausgestaltet ist, lässt sich das Fahrrad auch ausschließlich über den elektrischen Antrieb antreiben. Im vorliegenden Zusammenhang werden unter dem Begriff "Fahrrad" nicht nur Zweiräder, sondern auch Dreiräder oder Vierräder verstanden.

Ein solcher elektrischer Antrieb umfasst üblicherweise einen Elektromotor, der eine Antriebswelle aufweist. Ferner ist eine Abtriebswelle vorgesehen, die drehfest mit einem Treibrad verbunden ist. Das Treibrad dient zum Koppeln mit einem Kettenantrieb oder Riemenantrieb oder einem sonstigen Radantrieb des Fahrrads, der zum Antreiben eines angetriebenen Rads des Fahrrads dient, bei dem es sich üblicherweise um ein Hinterrad des Fahrrads handelt. Mit anderen Worten, im eingebauten Zustand ist das Treibrad über eine Kette oder über einen Riemen oder über eine andere Kopplung mit einem Hinterrad des Fahrrads antriebsverbunden. Dementsprechend befindet sich der Antrieb, zumindest jedoch die Abtriebswelle im Bereich einer Tretkurbelwelle des Fahrrads. Ferner umfasst der elektrische Antrieb ein Getriebe, das die Antriebswelle mit der Abtriebswelle antriebsmäßig verbindet. Hierdurch lässt sich die vergleichsweise hohe Drehzahl des Elektromotors auf die im Vergleich dazu geringe Drehzahl der Abtriebswelle reduzieren. Gleichzeitig lässt sich das mit Hilfe des Elektromotors bereitgestellte Drehmoment dadurch entsprechend vergrößern. Das Getriebe kann beispielsweise ein Abtriebsrad aufweisen, das in einer Antriebsdrehrichtung drehfest mit der Abtriebswelle verbunden ist. Bei den "Rädern" des Getriebes handelt es sich vorzugsweise um Zahnräder.

Sofern der elektrische Antrieb im Bereich einer Tretkurbelwelle angeordnet ist, ist der Durchmesser des Abtriebsrad begrenzt, damit die Bodenfreiheit des Fahrrads nicht beeinträchtigt wird. Dementsprechend müssen auf dieses Abtriebsrad relativ hohe Drehmomente eingeleitet werden. Beispielsweise weist das Getriebe hierzu ein Ausgangsrad auf, das mit dem Abtriebsrad in Eingriff steht. Für die Übertragung großer Drehmomente müssen bei einem herkömmlichen elektrischen Antrieb Abtriebsrad und Ausgangsrad aus Metall bestehen. Metallische Räder sind jedoch vergleichsweise teuer und sind häufig Ursache für Geräuschprobleme im Antrieb.

Aus der US 7 575 192 B1 ist ein unbemanntes Flugzeug bekannt, das zum Antreiben eines Propellers eine Mikroturbine aufweist, deren Antriebswelle über ein Getriebe mit einer den Propeller tragenden Propellerwelle gekoppelt ist. In diesem Getriebe ist eine Leistungsverzeigung realisiert, bei der ein angetriebenes Eingangszahnrad gleichzeitig mit zwei ersten Zahnrädern in Eingriff steht, die jeweils drehfest mit einem zweiten Zahnrad in Verbindung stehen. Diese zweiten Zahnräder stehen gleichzeitig mit einem gemeinsamen Ausgangszahnrad in Eingriff.

Ein gattungsgemäßer Elektroantrieb für ein Fahrrad dass die Merkmale des Oberbegriffs des Anspruchs 1 offenbart ist aus der WO 00/43259 A1 bekannt und umfasst einen Elektromotor, der eine Antriebswelle aufweist, eine Abtriebswelle, die drehfest mit einem Treibrad zum Koppeln mit einem Radantrieb des Fahrrads verbunden ist, und ein Getriebe, das die Antriebswelle mit der Abtriebswelle antriebsmäßig verbindet. Beim bekannten Antrieb ist dieses Getriebe als zweistufiges Planetengetriebe realisiert, bei dem ein eingangsseitiger erster Satz aus erstem Sonnenrad, ersten Planetenrädern und erstem Planetenträger und ein ausgangsseitiger zweiter Satz aus zweitem Sonnenrad, zweiten Planetenrädern und zweitem Planetenträger in einem gemeinsamen Hohlrad angeordnet sind. Das erste Sonnenrad ist drehfest mit dem Rotor des Elektromotors verbunden. Der erste Planetenträger bildet mit dem zweiten Sonnenrad eine drehfeste Einheit. Der zweite Planetenträger ist über eine Ratschenkupplung mit der Abtriebswelle gekoppelt, die mit dem Treibrad eine drehfeste Einheit bildet. Ein anderer Elektroantrieb für ein Fahrrad ist aus der WO 2013/156445 A1 bekannt. Das Getriebe weist eingangsseitig ein mit dem Elektromotor gekoppeltes einstufiges Planetengetriebe und ausgangsseitig ein mit dem Planetengetriebe gekoppeltes Zugmittelgetriebe mit einem Zahnriemen auf.

Die vorliegende Erfindung beschäftigt sich mit dem Problem, für einen elektrischen Antrieb der vorstehend beschriebenen Art bzw. für ein damit ausgestattetes Fahrrad eine verbesserte Ausführungsform anzugeben, die sich insbesondere durch eine preiswerte Herstellbarkeit und/oder durch eine reduzierte Geräuschentwicklung auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, das Getriebe mit wenigstens zwei Ausgangsrädern auszustatten, die zum Antreiben des Abtriebsrad dienen und hierzu mit dem Abtriebsrad jeweils für sich in Eingriff stehen. Hierzu sind die wenigstens zwei Ausgangsräder in Umfangsrichtung zueinander versetzt am Umfang des Abtriebsrads angeordnet. Über eine im Getriebe realisierte geeignete Leistungsverzweigung wird die Antriebsleistung des Elektromotors auf die wenigstens zwei Ausgangsräder aufgeteilt. Diese Maßnahmen haben zur Folge, dass das insgesamt auf das Abtriebsrad einzuleitende Drehmoment auf wenigstens zwei Eingriffsstellen aufgeteilt wird, nämlich auf die Eingriffsstellen der wenigstens zwei Ausgangsräder. Hierdurch wird die Belastung des Abtriebsrads und des jeweiligen Ausgangsrads im jeweiligen Eingriff signifikant reduziert. Bei einer gleichmäßigen Leistungsverzweigung auf genau zwei Ausgangsräder halbiert sich das Drehmoment in der jeweiligen Eingriffsstelle. Die wenigstens zwei Ausgangsräder, die im Folgenden auch als "erstes Ausgangsrad" und "zweites Ausgangsrad" bezeichnet werden, leiten somit jeweils für sich einen Anteil der Antriebsleistung in das Abtriebsrad ein. Durch die sich signifikant reduzierten Drehmomente an der jeweiligen Eingriffsstelle ist es insbesondere möglich, die Ausgangsräder und/oder Abtriebsrad aus Kunststoff herzustellen. Insofern lassen sich die Herstellungskosten reduzieren. Darüber hinaus wird die Gefahr einer Geräuschentwicklung reduziert.

Vorteilhaft kann vorgesehen sein, dass eine erste Rotationsachse, um welche das erste Ausgangsrad dreht, und eine zweite Rotationsachse, um welche das zweite Ausgangsrad dreht, innerhalb des Getriebes stationär angeordnet sind. Hierdurch wird eine einfach realisierbare, kompakte Bauform erreicht.

Von besonderem Vorteil ist eine Ausführungsform, bei welcher eine erste Rotationsachse, um welche das erste Ausgangsrad dreht, und eine zweite Rotationsachse, um welche das zweite Ausgangsrad dreht, geometrisch zwischen einer Abtriebsachse, um welche die Abtriebswelle dreht, und einer Antriebsachse, um welche die Antriebswelle dreht, angeordnet sind. Hierdurch wird zum einen eine kompakte Bauform unterstützt. Zum anderen lässt sich dadurch die Bodenfreiheit für das Fahrrad im Bereich des Antriebs erhöhen. Im eingebauten Zustand ist der Antrieb im Wesentlichen oberhalb einer Tretkurbelwelle des Fahrrads angeordnet, wenn das Fahrrad auf einem Untergrund steht oder fährt. Die Abtriebswelle befindet sich in diesem Einbauzustand im Bereich der Tretkurbelwelle und bildet somit den tiefsten Bereich des Antriebs. Die Ausgangsräder befinden sich im Einbauzustand somit oberhalb der Abtriebswelle und unterhalb der Antriebswelle.

In vorliegendem Zusammenhang wird unter einer "Welle" ein körperliches Bauteil verstanden, während unter einer "Achse" eine imaginäre gerade Linie verstanden wird. Bei einer drehenden Welle fällt daher die zugehörige Drehachse mit der Längsmittelachse der Welle zusammen.

Entsprechend einer vorteilhaften Ausführungsform wird im Getriebe die Leistungsverzweigung dadurch realisiert, dass das erste Ausgangsrad drehfest mit einem ersten Zwischenrad verbunden ist, während das zweite Ausgangsrad drehfest mit einem zweiten Zwischenrad verbunden ist. Das Getriebe weist außerdem ein Eingangsrad auf, das mit dem ersten Zwischenrad und mit dem zweiten Zwischenrad in Eingriff steht. Das Eingangsrad ist nun innerhalb des Getriebes antriebsmäßig mit der Antriebswelle verbunden. Die vorstehend genannte Leistungsverzweigung ergibt sich somit dadurch, dass das Eingangsrad seine Antriebsleistung auf die beiden damit in Eingriff stehenden Zwischenräder aufteilt, die diese dann über die beiden Ausgangsräder an verschiedenen Eingriffsstellen auf das Abtriebsrad übertragen, so dass letztlich am Abtriebsrad wieder die gesamte Antriebsleistung zur Verfügung steht.

Vorteilhaft ist eine Weiterbildung, bei welcher das erste Zwischenrad eine größere Zähnezahl aufweist als das erste Ausgangsrad, wobei zweckmäßig auch das zweite Zwischenrad eine größere Zähnezahl aufweist als das zweite Ausgangsrad. Hierdurch wird eine Übersetzung realisiert, die das am Eingangsrad bereitgestellte Drehmoment vergrößert, so dass letztlich am Abtriebsrad ein vergrößertes Drehmoment zur Verfügung steht.

Bei einer anderen Ausführungsform kann vorgesehen sein, dass das erste Zwischenrad das Abtriebsrad an einer ersten Axialseite radial übergreift, während das zweite Zwischenrad das Abtriebsrad an einer zweiten Axialseite radial übergreift. Hierdurch ergibt sich eine radial kompakte Bauform, bei welcher das Abtriebsrad axial zwischen dem ersten Zwischenrad und dem zweiten Zwischenrad liegt. Bei dieser Ausführungsform kann das Eingangsrad zweckmäßig axial geteilt sein, derart, dass es ein erstes Eingangsteilrad und ein zweites Eingangsteilrad aufweist. Das erste Eingangsteilrad steht an der ersten Axialseite des Abtriebsrads mit dem ersten Zwischenrad in Eingriff. Das zweite Eingangsteilrad steht an der zweiten Axialseite des Abtriebsrads mit dem zweiten Zwischenrad in Eingriff. Durch diese Maßnahme befinden sich somit die beiden Eingangsteilräder axial beiderseits des Abtriebsrads, wodurch es möglich ist, eine Welle, welche die beiden Eingangsteilräder drehfest miteinander verbindet, radial vergleichsweise nahe am Umfang des Abtriebsrads zu positionieren. Insbesondere können sich dadurch die Eingangsteilräder und das Abtriebsrad in axialer Blickrichtung radial überlappen. Somit unterstützen diese Maßnahmen eine kompakte Bauform.

Eine andere Ausführungsform schlägt vor, dass das erste Zwischenrad und das zweite Zwischenrad das Abtriebsrad an derselben Axialseite radial übergreifen. Insbesondere können die beiden Zwischenräder dabei in derselben Axialebene liegen, so dass in der Axialrichtung eine kompakte Bauform realisiert wird.

Bei einer Weiterbildung kann das erste Zwischenrad mit einem ersten Axialabschnitt des Eingangsrads in Eingriff stehen, während das zweite Zwischenrad mit einem zweiten Axialabschnitt des Eingangsrads in Eingriff steht, der am Eingangsrad zum ersten Axialabschnitt axial versetzt angeordnet ist. Somit werden am Eingangsrad zwei axial zueinander versetzte Eingriffsstellen mit den beiden Zwischenrädern realisiert, wodurch an diesen Eingriffsstellen die Belastung des Eingangsrads reduziert wird.

Eine vorteilhafte Weiterbildung schlägt vor, dass der erste Axialabschnitt des Eingangsrads ein erstes Axialende des Eingangsrads aufweist und von einem zweiten Axialende des Eingangsrads axial beabstandet ist. Im Unterschied dazu weist der zweite Axialabschnitt des Eingangsrads das zweite Axialende des Eingangsrads auf und ist vom ersten Axialende des Eingangsrads axial beabstandet. Das erste Zwischenrad kann nun axial beabstandet vom zweiten Axialende des Eingangsrads mit dem Eingangsrad in Eingriff stehen, während das zweite Zwischenrad axial beabstandet vom ersten Axialende des Eingangsrads mit dem Eingangsrad in Eingriff steht. Auch diese Maßnahme reduziert die Belastung des Eingangsrads und führt zu einer kompakten Bauform.

Zweckmäßig kann vorgesehen sein, dass das Eingangsrad an seinem Umfang etwa gleich groß dimensioniert ist wie die Summe aus den axialen Dimensionen der beiden Zwischenräder an deren Umfang. Hierdurch werden axial getrennte Eingriffsstellen für die beiden Zwischenräder am Eingangsrad bei axial kompakter Bauform realisiert.

Eine andere Ausführungsform schlägt vor, dass das erste Zwischenrad und das zweite Zwischenrad zueinander axial versetzt mit dem Eingriffsrad in Eingriff stehen. Auch diese Maßnahme reduziert die Belastung des Eingangsrads.

Gemäß einer vorteilhaften Ausführungsform kann der axiale Versatz der beiden Zwischenräder am Eingangsrad so gewählt sein, dass es möglich ist, die Zwischenräder am Eingangsrad so zu positionieren, dass sie einander in axialer Blickrichtung überschneiden. Mit anderen Worten, gemäß einer Weiterbildung kann vorgesehen sein, dass das erste Zwischenrad und das zweite Zwischenrad sich radial übergreifen. Auch diese Maßnahme kann eine kompakte Bauform des Getriebes unterstützen.

Innerhalb des Getriebes führt ein erster Übersetzungspfad vom Eingangsrad über das erste Zwischenrad und über das erste Ausgangsrad zum Abtriebsrad, während ein zweiter Übersetzungspfad vom Eingangsrad über das zweite Zwischenrad und über das zweite Ausgangsrad zum Abtriebsrad führt. Zweckmäßig definieren der erste Übersetzungspfad und der zweite Übersetzungspfad die gleiche Übersetzung.

Gemäß einer Weiterbildung kann nun vorgesehen sein, dass das erste Zwischenrad und das zweite Zwischenrad dieselbe Zähnezahl aufweisen und dass das erste Ausgangsrad und das zweite Ausgangsrad dieselbe Zähnezahl aufweisen. Hierdurch sind die beiden Übersetzungspfade identisch ausgestaltet. Insbesondere können dadurch die Zwischenräder als Gleichteile konzipiert sein. Ebenso lassen sich die Ausgangsräder als Gleichteile konzipieren.

Eine alternative Ausführungsform schlägt dagegen vor, dass das erste Zwischenrad und das zweite Zwischenrad verschiedene Zähnezahlen aufweisen und dass das erste Ausgangsrad und das zweite Ausgangsrad verschiedene Zähnezahlen aufweisen. Hierdurch sind die beiden Übersetzungspfade unterschiedlich, jedoch immer noch so, dass sie letztlich die gleiche Übersetzung definieren. Eine derartige Ausführungsform kann zu Bauraumvorteilen führen.

Zweckmäßig kann das Eingangsrad drehfest mit der Antriebswelle verbunden sein, wodurch das Getriebe besonders kompakt baut. Bei dieser Ausführungsform treibt der Elektromotor somit über seine Antriebswelle unmittelbar das Eingangsrad an.

Bei einer alternativen Ausführungsform kann dagegen vorgesehen sein, dass das Eingangsrad drehfest mit dem Ausgang eines weiteren einstufigen oder mehrstufigen Getriebeabschnitts, z.B. in Form eines Planetengetriebes, verbunden ist, das eingangsseitig mit der Antriebswelle verbunden ist. Beispielsweise kann das Eingangsrad drehfest mit einem Planetenradträger des Planetengetriebes verbunden sein.

Eine andere Ausführungsform schlägt vor, dass die Abtriebswelle durch eine Tretkurbelwelle gebildet ist. In diesem Fall wirkt der Antrieb unmittelbar mit der Tretkurbelwelle zusammen.

Zweckmäßig kann vorgesehen sein, dass das Abtriebsrad über einen Freilauf mit der Abtriebswelle verbunden ist, der in der Antriebsdrehrichtung ein Drehmoment vom Abtriebsrad auf die Abtriebswelle überträgt und in einer der Antriebsdrehrichtung entgegengesetzten Gegendrehrichtung eine Relativverdrehung zwischen Abtriebsrad und Abtriebswelle erlaubt.

Bei einer bevorzugten Ausführungsform kann die Abtriebswelle als Hohlwelle ausgestaltet sein und von einer Tretkurbelwelle koaxial durchsetzt sein. Die Tretkurbelwelle ist dabei in der Antriebsdrehrichtung drehfest mit der Abtriebswelle verbunden. Durch diese Maßnahme vereinfacht sich die Realisierung des Hilfsantriebs. Die Tretkurbelwelle ist im betriebsbereiten Einbauzustand, also am Fahrrad, an ihren Längsenden jeweils mit einer Tretkurbel versehen, wobei die jeweilige Tretkurbel jeweils ein Pedal trägt, so dass der Fahrradfahrer über die Pedale, Tretkurbeln und Tretkurbelwelle seine Antriebsleistung in den Antrieb einbringen kann.

Vorzugsweise kann die Tretkurbelwelle über einen Freilauf mit der Abtriebswelle verbunden sein, der in der Antriebsdrehrichtung ein Drehmoment von der Tretkurbelwelle auf die Abtriebswelle überträgt und in einer Antriebsdrehrichtung entgegengesetzten Gegendrehrichtung eine Relativverdrehung zwischen Tretkurbelwelle und Abtriebswelle erlaubt. Mit Hilfe dieses Freilaufs kann die Abtriebswelle in der Antriebsdrehrichtung schneller drehen als die Tretkurbelwelle. Ebenso lässt sich die Tretkurbelwelle mit einer der Drehrichtungen der Abtriebswelle entgegengesetzten Drehrichtung drehen.

Gemäß einer vorteilhaften Ausführungsform kann mindestens eines der Ausgangsräder und/oder das Eingangsrad und/oder zumindest eines der Zwischenräder und/oder das Abtriebsrad aus Kunststoff hergestellt sein. Hierdurch werden zum einen die Gefahr einer Geräuschentwicklung und zum anderen Herstellungskosten reduziert.

Ein erfindungsgemäßes Fahrrad umfasst eine Tretkurbelwelle sowie einen Radantrieb, wie z.B. einen Kettenantrieb oder einen Riemenantrieb, und ist außerdem mit einem elektrischen Antrieb der vorstehend vorgestellten Art ausgestattet. Das Fahrrad weist ferner in üblicher Weise wenigstens ein Vorderrad und wenigstens ein Hinterrad auf. Der Radantrieb dient zum Antreiben eines angetriebenen Rads des Fahrrads, bei dem es sich üblicherweise um ein Hinterrad handelt.

Bevorzugt ist eine Bauform, bei welcher die Ausgangsräder, wenn das Fahrrad auf einem Untergrund steht oder fährt, an einer vom Untergrund abgewandten Seite der Abtriebswelle angeordnet sind. Hierdurch gewinnt das Fahrrad Bodenfreiheit im Bereich des Antriebs.

Besonders vorteilhaft ist eine Bauform, bei welcher das Getriebe abgesehen vom Abtriebsrad oberhalb der Abtriebswelle angeordnet ist, wenn das Fahrrad auf einem Untergrund steht oder fährt.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Prinzipdarstellung eines elektrischen Antriebs,
- Fig. 2: eine Prinzipdarstellung des elektrischen Antriebs, jedoch bei einer anderen Ausführungsform,
- Fig. 3: eine Prinzipdarstellung eines Teils des elektrischen Antriebs, jedoch bei einer weiteren Ausführungsform,
- Fig. 4: eine Axialansicht auf einen Teil des Antriebs,
- Fig. 5: eine radiale Ansicht des Antriebs aus Fig. 4,
- Fig. 6: eine radiale Ansicht des Antriebs, jedoch bei einer anderen Ausführungsform,
- Fig. 7: eine axiale Ansicht des Antriebs aus Fig. 6,
- Fig. 8: eine radiale Ansicht des Antriebs, jedoch bei einer weiteren Ausführungsform,
- Fig. 9: eine axiale Ansicht des Antriebs, jedoch bei einer nochmals anderen Ausführungsform.

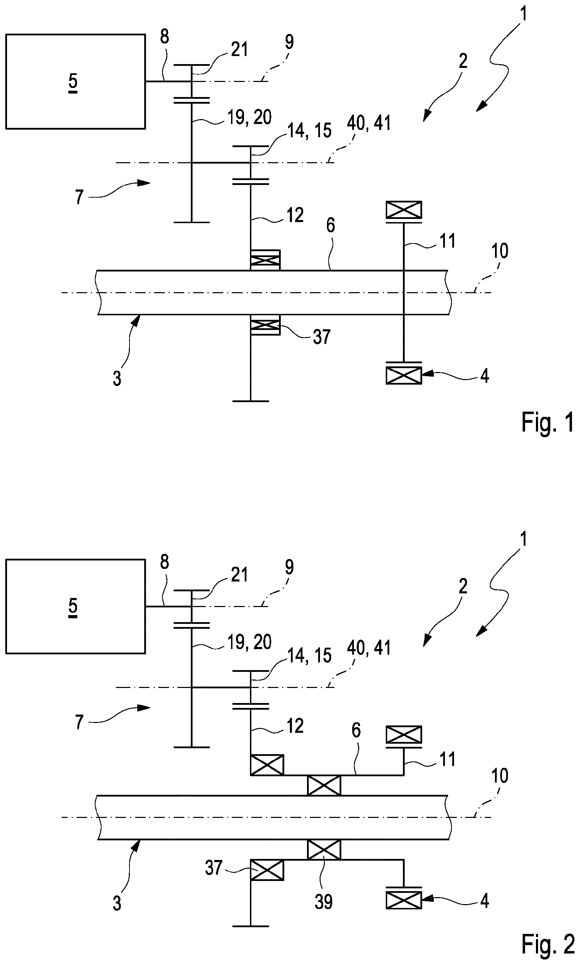

Entsprechend den Fig. 1 und 2 umfasst ein Fahrrad 1, das hier nur im Bereich eines elektrischen Antriebs 2 dargestellt ist, eine Tretkurbelwelle 3 sowie einen Radantrieb 4, der vorzugsweise als Kettenantrieb 4 oder als Riemenantrieb 4 ausgestaltet ist. Grundsätzlich ist auch ein Kardanantrieb 4 denkbar. Der Radantrieb 4 dient zum Antreiben eines hier nicht gezeigten angetriebenen Rads des Fahrrads 1, bei dem es sich bevorzugt um ein Hinterrad des Fahrrads 1 handelt. Außerdem umfasst das Fahrrad 1 besagten Antrieb 2. Die Tretkurbelwelle 3, die hier zum Bauumfang des Antriebs 2 zählen kann, ist im fertig montiertem Zustand des Fahrrads 1 an ihren Längsenden jeweils mit einer hier nicht gezeigten Tretkurbel drehfest verbunden, an denen sich jeweils ein hier ebenfalls nicht gezeigtes Pedal befindet.

Entsprechend den Fig. 1 bis 9 umfasst der elektrische Antrieb 2 einen Elektromotor 5, eine Abtriebswelle 6 und ein Getriebe 7. Der Elektromotor 5 weist eine Antriebswelle 8 auf, die um eine Antriebsachse 9 rotiert. Die Abtriebswelle 6 rotiert um eine Abtriebsachse 10 und ist mit einem Treibrad 11 drehfest verbunden, bei dem es sich vorzugsweise um ein Zahnrad handelt. Über das Treibrad 11 ist der Antrieb 2 mit dem Radantrieb 4, insbesondere mit dem Kettenantrieb 4 bzw. mit dem Riemenantrieb 4 bzw. mit dem Kardanantrieb 4 verbunden.

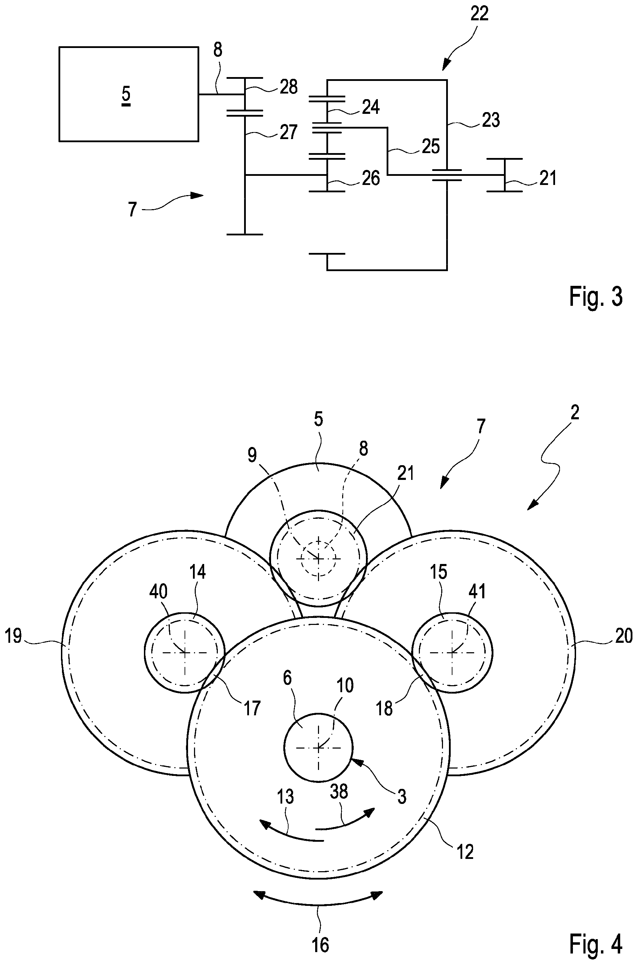

Das Getriebe 7 umfasst ein Abtriebsrad 12, vorzugsweise ein Zahnrad, das in einer in den Fig. 4, 7 und 9 durch einen Pfeil angedeuteten Antriebsdrehrichtung 13 drehfest mit der Abtriebswelle 6 verbunden ist. Das Getriebe 7 weist ferner zumindest zwei Ausgangsräder, vorzugsweise jeweils ein Zahnrad, nämlich ein erstes Ausgangsrad 14 und ein zweites Ausgangsrad 15 auf. Bei anderen Beispielen können auch mehr als zwei Ausgangsräder 14, 15 vorhanden sein. In den Prinzipdarstellungen der Fig. 1 und 2 ist jeweils nur eines der Ausgangsräder 14, 15 erkennbar. Das jeweilige Ausgangsrad 14, 15 dient zum Antreiben des Abtriebsrads 12 und steht hierzu mit dem Abtriebsrad 12 in Eingriff. Die beiden Ausgangsräder 14, 15 sind dabei in der in den Fig. 4, 7 und 9 durch einen Doppelpfeil angedeuteten Umfangsrichtung 16 des Abtriebsrads 12 zueinander versetzt am Abtriebsrad 12 angeordnet. Um die Antriebsleistung des Elektromotors 5 über die beiden Ausgangsräder 14, 15 auf das Abtriebsrad 12 zu übertragen, ist im Getriebe 7 eine Leistungsverzweigung realisiert.

Diese Leistungsverzweigung kann die Antriebsleistung grundsätzlich in einem beliebigen, geeigneten Verhältnis auf die wenigstens zwei Ausgangsräder 14, 15 verteilen. Bevorzugt ist hier eine gleichmäßige bzw. symmetrische Leistungsverteilung auf die Ausgangsräder 14, 15. Bei genau zwei Ausgangsrädern 14, 15 wird demnach eine Leistungsverteilung im Verhältnis von 1:1 bevorzugt.

Das erste Ausgangsrad 14 dreht dabei um eine erste Rotationsachse 40, während das zweite Ausgangsrad 15 um eine zweite Rotationsachse 41 dreht. Diese Rotationsachsen 40, 41 sind stationär, das heißt, die beiden Rotationsachsen 40, 41 sind innerhalb des Getriebes 7 ortsfest angeordnet. Mit anderen Worten, die beiden Rotationsachsen 40, 41 verändern während des Betriebs des Antriebs 2 ihre räumliche Position oder Raumlage innerhalb des Getriebes 7 nicht.

Den Fig. 4 bis 9 lässt sich entnehmen, wie die beiden Ausgangsräder 14, 15 in der Umfangsrichtung 16 voneinander beabstandet jeweils für sich mit dem Abtriebsrad 12 in Eingriff stehen. Hierdurch wird die Belastung der jeweiligen Eingriffsstelle signifikant reduziert. Eine erste Eingriffsstelle zwischen dem ersten Ausgangsrad 14 und dem Abtriebsrad 12 ist dabei mit 17 bezeichnet, während eine zweite Eingriffsstelle zwischen dem zweiten Ausgangsrad 15 und dem Abtriebsrad 12 mit 18 bezeichnet ist.

Entsprechend den Fig. 4 bis 9 ist das erste Ausgangsrad 14 drehfest mit einem ersten Zwischenrad 19 verbunden, während das zweite Ausgangsrad 15 mit einem zweiten Zwischenrad 20 drehfest verbunden ist. In den vereinfachten Darstellungen der Fig.1 und 2 ist jeweils nur eines der Zwischenräder 19, 20 erkennbar. Das Getriebe 7 ist außerdem mit einem Eingangsrad 21 ausgestattet, das mit dem ersten Zwischenrad 19 und mit dem zweiten Zwischenrad 20 jeweils in Eingriff steht. In den Beispielen der Fig. 1, 2 und 4 bis 9 ist dieses Eingangsrad 21 drehfest mit der Antriebswelle 8 verbunden. Im Unterschied dazu zeigt Fig. 3 rein exemplarisch eine andere Ausführungsform, bei welcher das Eingangsrad 21 über weitere Getriebeabschnitte mit der Antriebswelle 8 verbunden ist. Im Beispiel der Fig. 3 umfasst das Getriebe 7 ein Planetengetriebe 22, über welches das Eingangsrad 21 mit der Antriebswelle 8 verbunden ist. Das Planetengetriebe 22 weist dabei in üblicher Weise ein Hohlrad 23, Planetenräder 24, die mit dem Hohlrad 22 in Eingriff stehen, einen Planetenradträger 25, an dem die Planetenräder 24 drehbar gelagert sind, und ein Sonnenrad 26 auf, das mit den Planetenrädern 24 in Eingriff steht. Im Beispiel der Fig. 3 ist das Sonnenrad 26 über eine weitere Getriebestufe, die durch zwei Zahnräder 27 und 28 gebildet ist, mit der Antriebswelle 8 verbunden. Das Eingangsrad 21 ist hier drehfest mit dem Planetenradträger 25 verbunden.

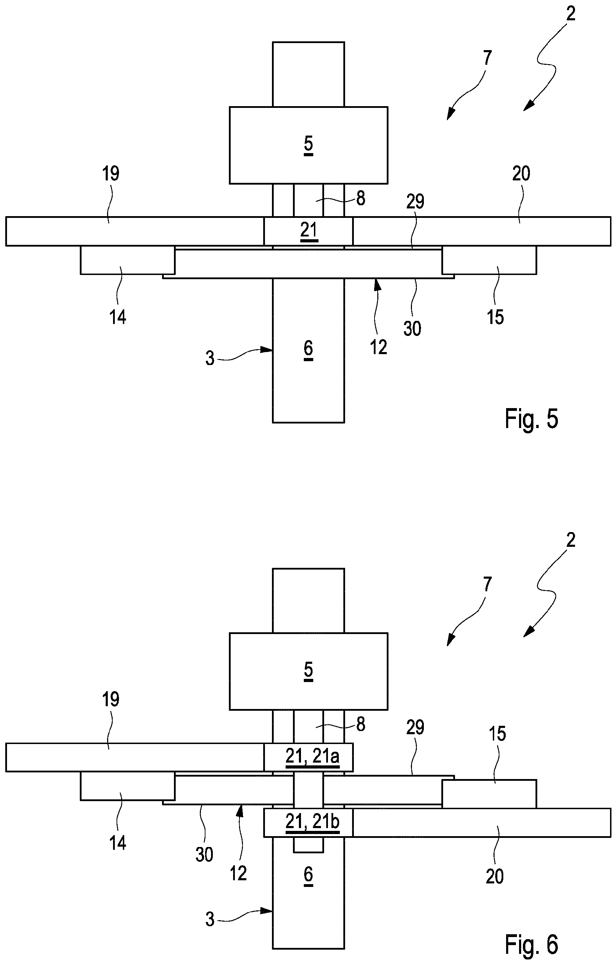

Bei den in den Fig. 4 bis 9 gezeigten Ausführungsformen besitzt das erste Zwischenrad 19 eine größere Zähnezahl als das erste Ausgangsrad 14. Ebenso besitzt das zweite Zwischenrad 20 eine größere Zähnezahl als das zweite Ausgangsrad 15. Bei der in den Fig. 4 und 5 gezeigten Ausführungsform sind das erste Zwischenrad 19 und das zweite Zwischenrad 20 an derselben Axialseite des Abtriebsrads 12 angeordnet und übergreifen dort das Abtriebsrad 12 radial. In der in Fig. 4 gezeigten Axialansicht ergibt sich dadurch eine radiale Überlappung der beiden Zwischenräder 19, 20 durch das Abtriebsrad 12.

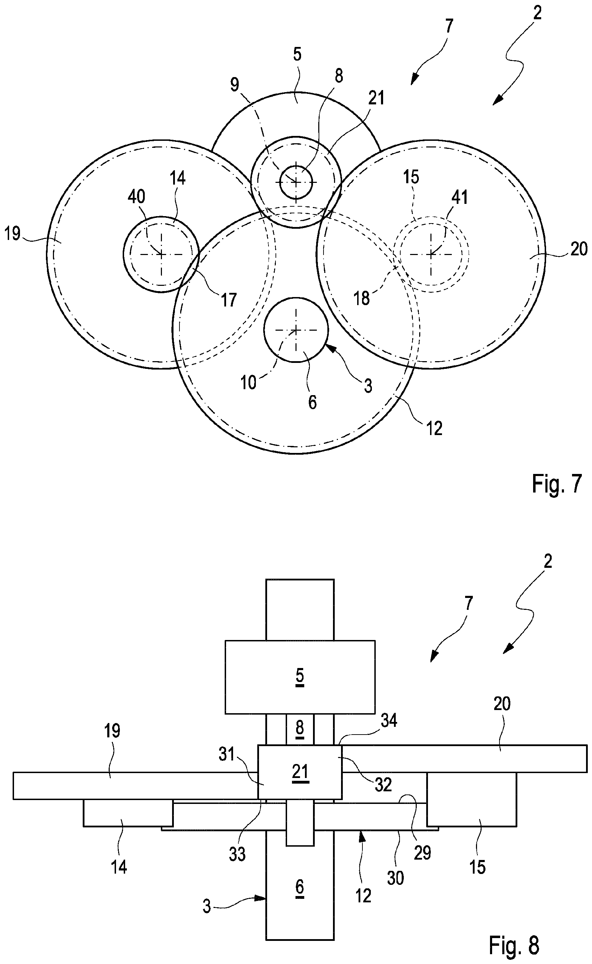

Bei den Fig. 6 und 7 ist dagegen vorgesehen, dass das erste Zwischenrad 19 das Abtriebsrad 12 an einer ersten Axialseite 29 radial übergreift, während das zweite Zwischenrad 20 das Abtriebsrad 12 an einer zweiten Axialseite 30 radial übergreift. Bei einer Anordnung der Zwischenräder 19, 20, des Abtriebsrads 12 und des Eingangsrads 21 relativ zueinander wie in Fig. 4 kann zum Antreiben der beiden Zwischenräder 19, 20 ein axial ungeteiltes, durchgehendes Eingangsrad 21 zum Einsatz kommen. Bei der in Fig. 7 gezeigten relativen Anordnung der Zwischenräder 19, 20, des Abtriebsrads 12 und des Eingangsrads 21 zueinander wird dagegen die in Fig. 6 gezeigte geteilte Ausführung des Eingangsrads 21 bevorzugt. Gemäß Fig. 6 ist das Eingangsrad 21 axial geteilt, so dass es ein erstes Eingangsteilrad 21a und ein zweites Eingangsteilrad 21b aufweist, die axial voneinander beabstandet sind und jeweils für sich mit der Antriebswelle 8 drehfest verbunden sind. Das erste Eingangsteilrad 21a steht an der ersten Axialseite 29 des Abtriebsrads 12 mit dem ersten Zwischenrad 19 in Eingriff. Das zweite Eingangsteilrad 21b steht an der zweiten Axialseite 30 des Abtriebsrads 12 mit dem zweiten Zwischenrad 20 in Eingriff. Bei der in Fig. 7 gezeigten Anordnung ergibt sich eine radiale Überlappung zwischen den Eingangsteilrädern 21a, 21b und dem Abtriebsrad 12 in der axialen Blickrichtung. Hierdurch lässt sich die Antriebswelle 8 radial nahe am Umfang des Abtriebsrads 12 positionieren.

Im Beispiel der Fig. 5 stehen die beiden Zwischenräder 19, 20 in demselben Axialabschnitt mit dem Eingangsrad 21 in Eingriff. Hierdurch lässt sich das Eingangsrad 21 axial etwa gleich groß dimensionieren wie die beiden Zwischenräder 19, 20. Insbesondere lassen sich die Zwischenräder 19, 20 und das Eingangsrad 21 hierdurch in derselben Axialebene anordnen.

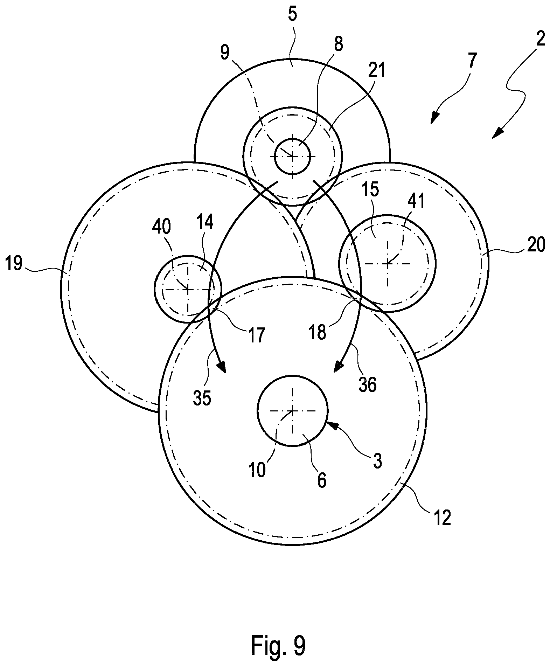

Im Unterschied dazu zeigt Fig. 8 eine Ausführungsform, bei welcher das erste Zwischenrad 19 mit einem ersten Axialabschnitt 31 des Eingangsrads 21 in Eingriff steht, während das zweite Zwischenrad 20 mit einem zweiten Axialabschnitt 32 des Eingangsrads 21 in Eingriff steht. Der zweite Axialabschnitt 32 ist dabei am Eingangsrad 21 zum ersten Axialabschnitt 31 axial versetzt angeordnet. Insbesondere kann vorgesehen sein, dass der erste Axialabschnitt 31 des Eingangsrads 21 ein erstes Axialende 33 des Eingangsrads 21 aufweist und von einem zweiten Axialende 34 des Eingangsrads 21 axial beabstandet ist. Der zweite Axialabschnitt 32 des Eingangsrads 21 kann dagegen das zweite Axialende 34 des Eingangsrads 21 aufweisen und vom ersten Axialende 33 des Eingangsrads 21 axial beabstandet sein. Das erste Zwischenrad 19 steht axial beabstandet vom zweiten Axialende 34 des Eingangsrads 21 mit dem Eingangsrad 21 in Eingriff. Das zweite Zwischenrad 20 steht axial beabstandet vom ersten Axialende 33 des Eingangsrads 21 mit dem Eingangsrad 21 in Eingriff. Somit stehen das erste Zwischenrad 19 und das zweite Zwischenrad 20 zueinander axial versetzt mit dem Eingangsrad 21 in Eingriff. Dabei ist grundsätzlich auch eine Konfiguration gemäß Fig. 9 realisierbar, bei welcher sich das erste Zwischenrad 19 und das zweite Zwischenrad 20 in der Axialrichtung gesehen radial übergreifen.

Bei allen hier gezeigten Ausführungsformen sind innerhalb des Getriebes 7 ein erster Übersetzungspfad und ein zweiter Übersetzungspfad ausgebildet, die in Fig. 9 jeweils durch einen Pfeil angedeutet und mit 35 für den ersten Übersetzungspfad und mit 36 für den zweiten Übersetzungspfad bezeichnet sind. Der erste Übersetzungspfad 35 führt vom Eingangsrad 21 über das erste Zwischenrad 19 und über das erste Ausgangsrad 14 zum Abtriebsrad 12. Der zweite Übersetzungspfad 36 führt vom Eingangsrad 21 über das zweite Zwischenrad 20 und über das zweite Ausgangsrad 15 zum Abtriebsrad 12. Beide Übersetzungspfade 35, 36 definieren die gleiche Übersetzung. Bei den Ausführungsformen der Fig. 4 bis 8 besitzt das erste Zwischenrad 19 dieselbe Zähnezahl wie das zweite Zwischenrad 20. Ebenso besitzt das erste Ausgangsrad 14 dieselbe Zähnezahl wie das zweite Ausgangsrad 15. Hierdurch lassen sich die Zwischenräder 19, 20 und die Ausgangsräder 14, 15 als Gleichteile realisieren, die gegeneinander austauschbar sind. Im Beispiel der Fig. 9 ist dagegen vorgesehen, dass die beiden Zwischenräder 19, 20 unterschiedliche Zähnezahlen aufweisen. Gleichzeitig besitzen auch die beiden Ausgangsräder 14, 15 unterschiedliche Zähnezahlen. Im Beispiel der Fig. 9 besitzt das erste Zwischenrad 19 eine größere Zähnezahl als das zweite Zwischenrad 20. Proportional dazu besitzt das erste Ausgangsrad 14 dann eine kleinere Zähnezahl als das zweite Ausgangsrad 15. Die Abstimmung der Zähnezahlen aufeinander erfolgt derart, dass die beiden Übersetzungspfade 35, 36 letztlich wieder dieselbe Übersetzung realisieren.

In den bevorzugten Ausführungsformen ist das Abtriebsrad 12 gemäß den Fig. 1 und 2 über einen Freilauf 37 mit der Abtriebswelle 6 verbunden. Dieser Freilauf 37 überträgt in der Antriebsdrehrichtung 13 ein Drehmoment vom Abtriebsrad 12 auf die Abtriebswelle 6. In einer Fig. 4 durch einen Pfeil angedeuteten Gegendrehrichtung 38, die der Antriebsdrehrichtung 13 entgegengesetzt orientiert ist, lässt der Freilauf 37 dagegen Relativverdrehungen zwischen Abtriebsrad 12 und Abtriebswelle 6 zu. Hierdurch kann beispielsweise die Abtriebswelle 6 in der Antriebsdrehrichtung 13 rotieren, während das Abtriebsrad 12 steht oder mit einer geringeren Drehzahl als die Abtriebswelle 6 in der Antriebsdrehrichtung 13 rotiert.

Zweckmäßig ist gemäß Fig. 2 die Abtriebswelle 6 als Hohlwelle ausgestaltet und von der Tretkurbelwelle 3 koaxial durchsetzt. Die Tretkurbelwelle 3 ist in der Antriebsdrehrichtung 13 drehfest mit der Abtriebswelle 6 verbunden. Zweckmäßig ist die Tretkurbelwelle 3 über einen weiteren Freilauf 39 mit der Abtriebswelle 6 verbunden. Dieser weitere Freilauf 39 funktioniert wie der zuvor beschriebene Freilauf 37 zwischen Abtriebsrad 12 und Abtriebswelle 6. Dementsprechend überträgt der weitere Freilauf 39 in der Antriebsdrehrichtung 13 ein Drehmoment von der Tretkurbelwelle 3 auf die Abtriebswelle 6, während er in der Gegendrehrichtung 38 eine Relativverdrehung zwischen Tretkurbelwelle 3 und Abtriebswelle 6 zulässt. Hierdurch kann die Abtriebswelle 6 in der Antriebsdrehrichtung 13 rotieren, während die Tretkurbelwelle 3 steht oder in der Gegendrehrichtung 38 rotiert oder in der Antriebsdrehrichtung 13 mit einer geringeren Drehzahl als die Antriebswelle 6 rotiert.

Zweckmäßig verlaufen die Antriebsachse 9 und die Abtriebsachse 10 parallel zueinander, jedoch zueinander radial beabstandet. Auch Rotationsachsen 40, 41 des ersten Ausgangsrads 14 bzw. des ersten Zwischenrads 19 und des zweiten Ausgangsrads 15 bzw. des zweiten Zwischenrads 20 erstrecken sich zweckmäßig parallel zur Antriebsachse 9 und parallel zur Abtriebsachse 10.

Zweckmäßig sind die Ausgangsräder 14, 15, das Eingangsrad 21, die Zwischenräder 19, 20 und das Abtriebsrad 12 aus Kunststoff hergestellt. Im Unterschied dazu sind die Tretkurbelwelle 3 und/oder die Abtriebswelle 6, die Antriebswelle 8 und das Treibrad 11 zweckmäßig aus Metall hergestellt.

Wie sich insbesondere den Fig. 4 bis 7 und 9 entnehmen lässt, sind bei den hier gezeigten Ausführungsformen die Ausgangsräder 14, 15 geometrisch zwischen der Antriebswelle 8 und der Abtriebswelle 6 angeordnet. Im Einbauzustand des Antriebs 2 befindet sich die Antriebswelle 8 an einer von einem hier nicht gezeigten Untergrund abgewandten Seite der Abtriebswelle 6, wenn das mit dem Antrieb 2 ausgestattete Fahrrad 1 auf diesem Untergrund steht oder fährt. In der Folge befindet sich abgesehen vom Abtriebsrad 12 das gesamte übrige Getriebe 7 im Wesentlichen oberhalb der Abtriebswelle 6.

## Patentansprüche

1. Elektrischer Antrieb (2) für ein Fahrrad (1),
- mit einem Elektromotor (5), der eine Antriebswelle (8) aufweist,
- mit einer Abtriebswelle (6), die drehfest mit einem Treibrad (11) zum Koppeln mit einem Radantrieb (4) des Fahrrads (1) verbunden ist,
- mit einem Getriebe (7), das die Antriebswelle (8) mit der Abtriebswelle (6) antriebsmäßig verbindet,
**dadurch gekennzeichnet,**
- **dass** das Getriebe (7) ein Abtriebsrad (12), das in einer Antriebsdrehrichtung (13) drehfest mit der Abtriebswelle (6) verbunden ist, und wenigstens zwei Ausgangsräder, nämlich ein erstes Ausgangsrad (14) und ein zweites Ausgangsrad (15) aufweist, die zum Antreiben des Abtriebsrads (12) in Umfangsrichtung (16) zueinander versetzt jeweils mit dem Abtriebsrad (12) in Eingriff stehen.

2. Antrieb (2) nach Anspruch 1,
**dadurch gekennzeichnet,**
**dass** eine erste Rotationsachse (40), um welche das erste Ausgangsrad (14) dreht, und eine zweite Rotationsachse (41), um welche das zweite Ausgangsrad (15) dreht, innerhalb des Getriebes (7) stationär angeordnet sind.

3. Antrieb (2) nach Anspruch 1 oder 2,
**dadurch gekennzeichnet,**
**dass** eine erste Rotationsachse (40), um welche das erste Ausgangsrad (14) dreht, und eine zweite Rotationsachse (41), um welche das zweite Ausgangsrad (15) dreht, geometrisch zwischen einer Abtriebsachse (10), um welche die Abtriebswelle (6) dreht, und einer Antriebsachse (9), um welche die Antriebswelle (8) dreht, angeordnet sind.

4. Antrieb (2) nach einem der vorhergehenden Ansprüche,
**dadurch gekennzeichnet,**
- **dass** das erste Ausgangsrad (14) drehfest mit einem ersten Zwischenrad (19) verbunden ist,
- **dass** das zweite Ausgangsrad (15) drehfest mit einem zweiten Zwischenrad (20) verbunden ist,
- **dass** das Getriebe (7) ein Eingangsrad (21) aufweist, das mit dem ersten Zwischenrad (19) und mit dem zweiten Zwischenrad (20) in Eingriff steht.

5. Antrieb (2) nach Anspruch 4,
**dadurch gekennzeichnet,**
- **dass** das erste Zwischenrad (19) eine größere Zähnezahl aufweist als das erste Ausgangsrad (14),
- **dass** das zweite Zwischenrad (20) eine größere Zähnezahl aufweist als das zweite Ausgangsrad (15),
- **dass** das erste Zwischenrad (19) das Abtriebsrad (12) an einer ersten Axialseite (29) radial übergreift,
- **dass** das zweite Zwischenrad (20) das Abtriebsrad (12) an einer zweiten Axialseite (30) radial übergreift.

6. Antrieb (2) nach Anspruch 5,
**dadurch gekennzeichnet,**
**dass** das Eingangsrad (21) axial geteilt ist in ein erstes Eingangsteilrad (21a), das an der ersten Axialseite (29) des Abtriebsrads (12) mit dem ersten Zwischenrad (19) in Eingriff steht, und ein zweites Eingangsteilrad (21b), das an der zweiten Axialseite (30) des Abtriebsrads (12) mit dem zweiten Zwischenrad (20) in Eingriff steht.

7. Antrieb (2) nach Anspruch 4,
**dadurch gekennzeichnet,**
- **dass** das erste Zwischenrad (19) eine größere Zähnezahl aufweist als das erste Ausgangsrad (14),
- **dass** das zweite Zwischenrad (20) eine größere Zähnezahl aufweist als das zweite Ausgangsrad (15),
- **dass** das erste Zwischenrad (19) und das zweite Zwischenrad (20) das Abtriebsrad (12) an derselben Axialseite (29, 30) radial übergreifen,
- **dass** das erste Zwischenrad (19) mit einem ersten Axialabschnitt (31) des Eingangsrads (21) in Eingriff steht,
- **dass** das zweite Zwischenrad (20) mit einem zweiten Axialabschnitt (32) des Eingangsrads (21) in Eingriff steht, der am Eingangsrad (21) zum ersten Axialabschnitt (31) axial versetzt angeordnet ist.

8. Antrieb (2) nach Anspruch 7,
**dadurch gekennzeichnet,**
- **dass** der erste Axialabschnitt (31) des Eingangsrads (21) ein erstes Axialende (33) des Eingangsrads (21) aufweist und von einem zweiten Axialende (34) des Eingangsrads (21) axial beabstandet ist,
- **dass** der zweite Axialabschnitt (32) des Eingangsrads (21) das zweite Axialende (34) des Eingangsrads (21) aufweist und vom ersten Axialende (33) des Eingangsrads (21) axial beabstandet ist,
- **dass** das erste Zwischenrad (19) axial beabstandet vom zweiten Axialende (34) des Eingangsrads (21) mit dem Eingangsrad (21) in Eingriff steht,
- **dass** das zweite Zwischenrad (20) axial beabstandet vom ersten Axialende (33) des Eingangsrads (21) mit dem Eingangsrad (21) in Eingriff steht,
- **dass** das erste Zwischenrad (19) und das zweite Zwischenrad (20) zueinander axial versetzt mit dem Eingangsrad (21) in Eingriff stehen,
- **dass** sich das erste Zwischenrad (19) und das zweite Zwischenrad (20) radial übergreifen.

9. Antrieb (2) nach einem der Ansprüche 4 bis 8,
**dadurch gekennzeichnet,**
- **dass** ein erster Übersetzungspfad (35) vom Eingangsrad (21) über das erste Zwischenrad (19) und das erste Ausgangsrad (14) zum Abtriebsrad (12) führt,
- **dass** ein zweiter Übersetzungspfad (36) vom Eingangsrad (21) über das zweite Zwischenrad (20) und das zweite Ausgangsrad (15) zum Abtriebsrad (12) führt,
- **dass** der erste Übersetzungspfad (35) und der zweite Übersetzungspfad (36) die gleiche Übersetzung definieren.

10. Antrieb (2) nach Anspruch 9,
**dadurch gekennzeichnet,**
- **dass** das erste Zwischenrad (19) und das zweite Zwischenrad (20) dieselbe Zähnezahl aufweisen, wobei das erste Ausgangsrad (14) und das zweite Ausgangsrad (15) dieselbe Zähnezahl aufweisen, oder
- **dass** das erste Zwischenrad (19) und das zweite Zwischenrad (20) verschiedene Zähnezahlen aufweisen, wobei das erste Ausgangsrad (14) und das zweite Ausgangsrad (15) verschiedene Zähnezahlen aufweisen.

11. Antrieb (2) nach einem der Ansprüche 4 bis 10,
**dadurch gekennzeichnet,**
- **dass** das Eingangsrad (21) drehfest mit der Antriebswelle (8) verbunden ist, oder
- **dass** das Getriebe (7) ein Planetengetriebe (22) aufweist, das antriebsmäßig zwischen der Antriebswelle (8) und dem Eingangsrad (21) angeordnet ist, oder
- **dass** das Getriebe (7) ein Planetengetriebe (22) aufweist, das antriebsmäßig zwischen der Antriebswelle (8) und dem Eingangsrad (21) angeordnet ist, wobei das Planetengetriebe (22) ein mit der Antriebswelle (8) direkt oder indirekt antriebsgekoppeltes Sonnenrad (26), mehrere Planetenräder (24), einen Planetenträger (25) und ein Hohlrad (23) aufweist, wobei der Planetenträger (25) drehfest mit dem Eingangsrad (21) verbunden ist.

12. Antrieb (2) nach einem der vorhergehenden Ansprüche,
**dadurch gekennzeichnet,**
- **dass** die Abtriebswelle (6) durch eine Tretkurbelwelle (3) gebildet ist, oder
- **dass** die Abtriebswelle (6) als Hohlwelle ausgestaltet ist und von einer Tretkurbelwelle (3) koaxial durchsetzt ist, wobei die Tretkurbelwelle (3) in der Antriebsdrehrichtung (13) drehfest mit der Abtriebswelle (6) verbunden ist.

13. Antrieb (2) nach einem der vorhergehenden Ansprüche,
**dadurch gekennzeichnet,**
**dass** mindestens eines der Ausgangsräder (14, 15) und/oder das Eingangsrad (21) und/oder zumindest eines der Zwischenräder (19, 20) und/oder das Abtriebsrad (12) aus Kunststoff hergestellt ist/sind.

14. Fahrrad (1),
- mit einer Tretkurbelwelle (3),
- mit einem Radantrieb (4) zum Antreiben eines angetriebenen Rads des Fahrrads (1),
- mit einem elektrischen Antrieb (2) nach einem der vorhergehenden Ansprüche.

15. Fahrrad (1) nach Anspruch 14,
**dadurch gekennzeichnet,**
- **dass** bei auf einem Untergrund stehendem oder fahrendem Fahrrad (1) die Ausgangsräder (14, 15) an einer vom Untergrund abgewandten Seite der Abtriebswelle (6) angeordnet sind, und/oder
- **dass** bei auf einem Untergrund stehendem oder fahrendem Fahrrad (1) das Getriebe (7) abgesehen vom Abtriebsrad (12) oberhalb der Abtriebswelle (6) angeordnet ist.

## Claims

1. Electrical drive (2) for a bicycle (1),
- with an electric motor (5), which has a drive shaft (8),
- with a driven shaft (6), which is connected to a driving gear (11) for conjoined rotation in order to couple same with a wheel drive (4) of the bicycle (1),
- with a transmission (7), which drivingly connects the drive shaft (8) to the driven shaft (6),
**characterised in that**
- the transmission (7) has a driven gear (12), which is connected in a drive direction of rotation (13) for conjoined rotation with the driven shaft (6), and at least two output gears, namely a first output gear (14) and a second output gear (15), which each mesh with the driven gear (12), offset from one another in the circumferential direction (16), in order to drive the driven gear (12).

2. Drive (2) according to claim 1,
**characterised in that**
a first axis of rotation (40), about which the first output gear (14) rotates, and a second axis of rotation (41), about which the second output gear (15) rotates, are arranged in a stationary manner inside the transmission (7).

3. Drive (2) according to claim 1 or 2,
**characterised in that**
a first axis of rotation (40), about which the first output gear (14) rotates, and a second axis of rotation (41), about which the second output gear (15) rotates, are arranged geometrically between a driven axis (10), about which the driven shaft (6) rotates, and a drive axis (9), about which the drive shaft (8) rotates.

4. Drive (2) according to any one of the preceding claims, **characterised in that**
- the first output gear (14) is connected for conjoined rotation with a first intermediate gear (19),
- the second output gear (15) is connected for conjoined rotation with a second intermediate gear (20),
- the transmission (7) has an input gear (21), which meshes with the first intermediate gear (19) and with the second intermediate gear (20).

5. Drive (2) according to claim 4,
**characterised in that**
- the first intermediate gear (19) has a larger number of teeth than the first output gear (14),
- the second intermediate gear (20) has a larger number of teeth then the second output gear (15),
- the first intermediate gear (19) radially overlaps the driven gear (12) on a first axial side (29),
- the second intermediate gear (20) radially overlaps the driven gear (12) on a second axial side (30),

6. Drive (2) according to claim 5,
**characterised in that**
the input gear (21) is axially divided into a first input partial gear (21a), which meshes on the first axial side (29) of the drive gear (12) with the first intermediate gear (19), and a second input partial gear (21b), that meshes on the second axial side (30) of the drive gear (12) with the second intermediate gear (20).

7. Drive (2) according to claim 4,
**characterised in that**
- the first intermediate gear (19) has a larger number of teeth than the first output gear (14),
- the second intermediate gear (20) has a larger number of teeth then the second output gear (15),
- the first intermediate gear (19) and the second intermediate gear (20) radially overlap the driven gear (12) on the same axial side (29, 30),
- the first intermediate gear (19) meshes with a first axial section (31) of the input gear (21),
- the second intermediate gear (20) meshes with a second axial section (32) of the input gear (21), which is arranged axially offset to the first axial section (31) on the input gear (21).

8. Drive (2) according to claim 7,
**characterised in that**
- the first axial section (31) of the input gear (21) has a first axial end (33) of the input gear (21) and is spaced apart from a second axial end (34) of the input gear (21),
- the second axial section (32) of the input gear (21) has the second axial end (34) of the input gear (21) and is spaced apart from the first axial end (33) of the input gear (21),
- the first intermediate gear (19) meshes with the input gear (21), axially spaced apart from the second axial end (34) of the input gear (21),
- the second intermediate gear (20) meshes with the input gear (21), axially spaced apart from the first axial end (33) of the input gear (21),
- the first intermediate gear (19) and the second intermediate gear (20) mesh with the input gear (21) axially offset from one another,
- the first intermediate gear (19) and the second intermediate gear (20) radially overlap.

9. Drive (2) according to any one of claims 4 to 8,
**characterised in that**
- a first gearing path (35) leads from the input gear (21), via the first intermediate gear (19) and the first output gear (14), to the driven gear (12),
- a second gearing path (36) leads from the input gear (21), via the second intermediate gear (20) and the second output gear (15), to the driven gear (12),
- the first gearing path (35) and the second gearing path (36) define the same gearing.

10. Drive (2) according to claim 9,
**characterised in that**
- the first intermediate gear (19) and the second intermediate gear (20) have the same number of teeth, wherein the first output gear (14) and the second output gear (15) have the same number of teeth, or
- the first intermediate gear (19) and the second intermediate gear (20) have different numbers of teeth, wherein the first output gear (14) and the second output gear (15) have different numbers of teeth.

11. Drive (2) according to any one of claims 4 to 10,
**characterised in that**
- the input gear (21) is connected for conjoined rotation with the drive shaft (8), or
- the transmission (7) has a planetary gearing (22), which is drivingly arranged between the drive shaft (8) and the input gear (21), or
- the transmission (7) has a planetary gearing (22), which is drivingly arranged between the drive shaft (8) and the input gear (21), wherein the planetary gearing (22) has a sun gear (26) directly or indirectly drivingly coupled to the drive shaft (8), a plurality of planetary gears (24), a planet carrier (25) and a ring gear (23), wherein the planet carrier (25) is connected for conjoined rotation with the input gear (21).

12. Drive (2) according to any one of the preceding claims,
**characterised in that**
- the driven shaft (6) is formed by a pedal crankshaft (3),
- the driven shaft (6) is embodied as a ring gear and is coaxially penetrated by a pedal crankshaft (3), wherein the pedal crankshaft (3) is connected for conjoined rotation in the drive direction of rotation (13) with the driven shaft (6).

13. Drive (2) according to any one of the preceding claims,
**characterised in that**
at least one of the output gears (14, 15) and/or the input gear (21) and/or at least one of the intermediate gears (19, 20) and/or the driven gear (12) is/are manufactured from plastic.

14. Bicycle (1),
- with a pedal crankshaft (3),
- with a wheel drive (4) for driving a driven wheel of the bicycle (1),
- with an electrical drive (2) according to any one of the preceding claims.

15. Bicycle (1) according to claim 14,
**characterised in that**
- when the bicycle (1) is standing or moving on a ground, the output gears (14, 15) are arranged on a side of the driven shaft (6) facing away from the ground, and/or
- when the bicycle (1) is standing or moving on a ground, the transmission (7), apart from the driven gear (12) is arranged above the driven shaft (6).

## Revendications

1. Entraînement électrique (2) pour une bicyclette (1),
- avec un moteur électrique (5) qui présente un arbre d'entraînement (8),
- avec un arbre de sortie (6) qui est relié sans pouvoir tourner à une roue motrice (11) pour le couplage avec un entraînement de roue (4) de la bicyclette (1),
- avec un engrenage (7) qui relie en entraînement l'arbre d'entraînement (8) à l'arbre de sortie (6),
**caractérisé en ce**
- **que** l'engrenage (7) présente une roue de sortie (12) qui est reliée dans un sens de rotation d'entraînement (13) sans pouvoir tourner à la roue de sortie (6), et au moins deux roues de sortie, à savoir une première roue de sortie (14) et une seconde roue de sortie (15) qui sont en prise pour l'entraînement de la roue de sortie (12) en déport dans le sens périphérique (16) l'une par rapport à l'autre respectivement avec la roue de sortie (12).

2. Entraînement (2) selon la revendication 1,
**caractérisé en ce**
**qu'**un premier axe de rotation (40), autour duquel la première roue de sortie (14) tourne, et un second axe de rotation (41), autour duquel la seconde roue de sortie (15) tourne, sont agencés de manière stationnaire à l'intérieur de l'engrenage (7).

3. Entraînement (2) selon la revendication 1 ou 2,
**caractérisé en ce**
**qu'**un premier axe de rotation (40), autour duquel la première roue de sortie (14) tourne, et un second axe de rotation (41), autour duquel la seconde roue de sortie (15) tourne, sont agencés de manière géométrique entre un axe de sortie (10), autour duquel l'arbre de sortie (6) tourne, et un axe d'entraînement (9), autour duquel l'arbre d'entraînement (8) tourne.

4. Entraînement (2) selon l'une des revendications précédentes,
**caractérisé en ce**
- **que** la première roue de sortie (14) est reliée sans pouvoir tourner à une première roue intermédiaire (19),
- **que** la seconde roue de sortie (15) est reliée sans pouvoir tourner à une seconde roue intermédiaire (20),
- **que** l'engrenage (7) présente une roue d'entrée (21) qui est en prise avec la première roue intermédiaire (19) et avec la seconde roue intermédiaire (20).

5. Entraînement (2) selon la revendication 4,
**caractérisé en ce**
- **que** la première roue intermédiaire (19) présente un nombre de dents supérieur à la première roue de sortie (14),
- **que** la seconde roue intermédiaire (20) présente un nombre de dents supérieur à la deuxième roue de sortie (15),
- **que** la première roue intermédiaire (19) recouvre radialement la roue de sortie (12) au niveau d'un premier côté axial (29),
- **que** la seconde roue intermédiaire (20) recouvre radialement la roue de sortie (12) au niveau d'un second côté axial (30).

6. Entraînement (2) selon la revendication 5,
**caractérisé en ce**
**que** la roue d'entrée (21) est divisée axialement en une première roue partielle d'entrée (21a) qui est en prise au niveau du premier côté axial (29) de la roue de sortie (12) avec la première roue intermédiaire (19), et une seconde roue partielle d'entrée (21b) qui est en prise au niveau du second côté axial (30) de la roue de sortie (12) avec la seconde roue intermédiaire (20).

7. Entraînement (2) selon la revendication 4,
**caractérisé en ce**
- **que** la première roue intermédiaire (19) présente un nombre de dents supérieur à la première roue de sortie (14),
- **que** la seconde roue intermédiaire (20) présente un nombre de dents supérieur à la deuxième roue de sortie (15),
- **que** la première roue intermédiaire (19) et la seconde roue intermédiaire (20) recouvrent radialement la roue de sortie (12) au niveau du même côté axial (29, 30),
- **que** la première roue intermédiaire (19) est en prise avec une première section axiale (31) de la roue d'entrée (21),
- **que** la seconde roue intermédiaire (20) est en prise avec une seconde section axiale (32) de la roue d'entrée (21) qui est agencée en déport axial au niveau de la roue d'entrée (21) par rapport à la première section axiale (31).

8. Entraînement (2) selon la revendication 7,
**caractérisé en ce**
- **que** la première section axiale (31) de la roue d'entrée (21) présente une première extrémité axiale (33) de la roue d'entrée (21) et est espacée axialement d'une seconde extrémité axiale (34) de la roue d'entrée (21),
- **que** la seconde section axiale (32) de la roue d'entrée (21) présente la seconde extrémité axiale (34) de la roue d'entrée (21) et est espacée axialement de la première extrémité axiale (33) de la roue d'entrée (21),
- **que** la première roue intermédiaire (19) est en prise espacée axialement de la seconde extrémité axiale (34) de la roue d'entrée (21) avec la roue d'entrée (21),
- **que** la seconde roue intermédiaire (20) est en prise espacée axialement de la première extrémité axiale (33) de la roue d'entrée (21) avec la roue d'entrée (21),
- **que** la première roue intermédiaire (19) et la seconde roue intermédiaire (20) sont en prise en déport axial l'une par rapport à l'autre avec la roue d'entrée (21),
- **que** la première roue intermédiaire (19) et la seconde roue intermédiaire (20) se recouvrent radialement.

9. Entraînement (2) selon l'une des revendications 4 à 8,
**caractérisé en ce**
- **qu'**un premier trajet de transmission (35) mène de la roue d'entrée (21) par le biais de la première roue intermédiaire (19) et la première roue de sortie (14) à la roue de sortie (12),
- **qu'**un second trajet de transmission (36) mène de la roue d'entrée (21) par le biais de la seconde roue intermédiaire (20) et la seconde roue de sortie (15) à la roue de sortie (12),
- **que** le premier trajet de transmission (35) et le second trajet de transmission (36) définissent la même transmission.

10. Entraînement (2) selon la revendication 9,
**caractérisé en ce**
- **que** la première roue intermédiaire (19) et la seconde roue intermédiaire (20) présentent le même nombre de dents, dans lequel la première roue de sortie (14) et la seconde roue de sortie (15) présentent le même nombre de dents, ou
- la première roue intermédiaire (19) et la seconde roue intermédiaire (20) présentent différents nombres de dents, dans lequel la première roue de sortie (14) et la seconde roue de sortie (15) présentent différents nombres de dents.

11. Entraînement (2) selon l'une des revendications 4 à 10,
**caractérisé en ce**
- **que** la roue d'entrée (21) est reliée sans pouvoir tourner à l'arbre d'entraînement (8), ou
- **que** l'engrenage (7) présente un engrenage planétaire (22) qui est agencé en entraînement entre l'arbre d'entraînement (8) et la roue d'entrée (21), ou
- **que** l'engrenage (7) présente un engrenage planétaire (22) qui est agencé en entraînement entre l'arbre d'entraînement (8) et la roue d'entrée (21), dans lequel l'engrenage planétaire (22) présente une roue solaire (26) couplée en entraînement directement ou indirectement à l'arbre d'entraînement (8), plusieurs roues planétaires (24), un support planétaire (25) et une roue creuse (23), dans lequel le support planétaire (25) est relié sans pouvoir tourner à la roue d'entrée (21).

12. Entraînement (2) selon l'une des revendications précédentes,
**caractérisé en ce**
- **que** l'arbre de sortie (6) est formé par un arbre de manivelle de pédalier (3), ou
- **que** l'arbre de sortie (6) est configuré comme arbre creux et est traversé coaxialement par un arbre de manivelle de pédalier (3), dans lequel l'arbre de manivelle de pédalier (3) est relié dans le sens de rotation d'entraînement (13) sans pouvoir tourner à l'arbre de sortie (6).

13. Entraînement (2) selon l'une des revendications précédentes,
**caractérisé en ce**
- **qu'**au moins une des roues de sortie (14, 15) et/ou la roue d'entrée (21) et/ou au moins une des roues intermédiaires (19, 20) et/ou la roue de sortie (12) est/sont fabriquée(s) en matière plastique.

14. Bicyclette (1),
- avec un arbre de manivelle de pédalier (3),
- avec un entraînement de roue (4) pour l'entraînement d'une roue entraînée de la bicyclette (1),
- avec un entraînement électrique (2) selon l'une des revendications précédentes.

15. Bicyclette (1) selon la revendication 14,
**caractérisée en ce**
- **qu'**en cas de bicyclette (1) roulant ou se trouvant sur un sol les roues de sortie (14, 15) sont agencées au niveau d'un côté éloigné du sol de l'arbre de sortie (6), et/ou
- **qu'**en cas de bicyclette (1) roulant ou se trouvant sur un sol l'engrenage (7) à l'exception de la roue de sortie (12) est agencé au-dessus de l'arbre de sortie (6).
